# EUROPÄISCHE PATENTSCHRIFT

(11) **EP 2 042 019 B1**
(45) Veröffentlichungstag und Bekanntmachung des Hinweises auf die Patenterteilung: **12.12.2012**
(21) Anmeldenummer: 08159228.9
(22) Anmeldetag: 27.06.2008
(51) Int. Cl.: A01D 41/127

(54) **Landwirtschaftliches Arbeitsfahrzeug**
Agricultural work vehicle
Véhicule de travail agricole

(30) Priorität: 27.09.2007 DE 102007046678
(43) Veröffentlichungstag der Anmeldung: 01.04.2009
(73) Patentinhaber: CLAAS Selbstfahrende Erntemaschinen GmbH, 33428 Harsewinkel (DE)
(72) Erfinder: Diekhans, Dr. Norbert, 33335 Gütersloh (DE); Meyer zu Helligen, Lars Peter, 32139 Spenge (DE)

(56) Entgegenhaltungen:
- EP-A- 0 586 999
- EP-A- 0 928 554
- EP-A- 1 297 733
- DE-A1- 19 807 145
- DE-A1-102004 048 083
- DE-C1- 4 341 834

## Beschreibung

Die Erfindung betrifft ein landwirtschaftliches Arbeitsfahrzeug nach dem Oberbegriff des Anspruchs 1.

Landwirtschaftliche Arbeitsfahrzeuge, wie beispielsweise Traktoren, Mähdrescher, Feldhäckaler, etc., verfügen in der Regel über eine Vielzahl von Arbeltsaggregaten, deren Einstellparameter mittels einer Steuereinheit beeinflussbar sind. Nun ist bei modernen landwirtschaftlichen Arbeitsmaschinen die Funktion und/oder das Arbeitsergebnis einzelner Arbeitsaggregate oder einer Mehrzahl von Arbeitsaggregaten im Wesentlichen von den richtigen Einstellparametern der einzelnen Arbeitsaggregate und/oder deren Zusammenspiel abhängig. Somit ist die richtige Wahl der Einstellparameter von entscheidender Bedeutung für die einwandfreie und effiziente Nutzung des landwirtschaftlichen Arbeitsfahrzeuges. Da jedoch sehr komplexe Zusammenhänge zwischen den einzelnen Arbeltseggregaten und deren Einfluss auf das Arbeitsergebnis bestehen, die Einstellparameter häufig einen nichtlinearen Einfluss auf das Arbeitsergebnis haben, sowie die Einsteilparameter zur Erreichung einer bestimmten Funktion oder eines bestimmten Arbeitsergebnisses einer starken Hysterese unterliegen, ist es insbesondere für ungeübte Bediener des Arbeitsfahrzeuges schwierig, die optimalen Einstellparameter der Arbeitsaggregate zu wählen. Um diesem Problem zu begegnen, sind aus dem Stand der Technik eine Reihe von Möglichkeiten bekannt, die den Bediener bei der Wahl der optimalen Einstellparameter unterstützen sollen, Beispielhaft ist aus der EP 1 297 733 A1 ein Verfahren zur Ermittlung von Erntemaschineneinstellungen bekannt, bei dem die Erntemaschine im Arbeitseinsatz zunächst mit einer annähernd gleichbleibenden Erntegutmenge beaufschlagt wird und das sich mit einer gewissen Zeitverzögerung einstellende Arbeitsergebnis aufgezeichnet und gemeinsam mit den zugehörigen Einstellparametern der Arbeitsaggregate abgespeichert wird. Nun kann der Bediener einen Einstellparameter eines Arbeitsaggregates verändern und die Erntemaschine beginnt erneut mit dem Arbeitseinsatz, wobei die zuvor beschriebene Aufzeichnung der Arbeitsergebnisse und anschließende Speicherung in Verbindung mit den zugehörigen Einstellparametern wiederholt wird. Nun werden die beiden aufgezeichneten Arbeitsergebnisse miteinander verglichen und die Einstellparameter des besseren Arbeitsergebnisses für die Einstellung der Arbeitsaggregete herangezogen.

Nachteilig an dem bekannten Verfahren ist es, dass aufgrund des zeitlichen Versatzes zwischen dem jeweiligen Beginn des Ernteeinsatzes und der sensorunterstützten Erfassung des erreichten Arbeitsergebnisses ein sehr hoher Zeitaufwand zur Optimierung der Einstellparameter erforderlich ist. Weiterhin ist es nachteilig, dass der Bediener mehrfach versuchen muss, einen annähernd konstanten Erntegutdurchsatz zu erreichen, um die erreichten Arbeitsergebnisse bei unterschiedlichen Einstellparametern miteinander vergleichbar zu machen. Dies erfordert ein hohes Maß an Können von dem Bediener und benötigt ebenfalls einen hohen Zeitaufwand.

Aus der EP 0 586 999 A1 ist ein Mähdrescher gemäß dem Oberbegriff des Anspruches 1 bekannt. Darin wird ein Steuerungssystem für einen Mähdrescher beschrieben, welches unter Verwendung eines neuronalen Netzwerkes zur Einstellung der einzelnen Arbeitsaggregate diese überwacht und steuert. Das Steuerungssystem umfasst eine Anzelgeinheit, auf der Änderungen von Arbeitsergebnissen eines Arbeitsaggregates in Folge der Änderung eines Arbeitsparameters angezeigt werden. Die Verwendung neuronaler Netzwerke innerhalb eines Steuerungssystems ist mit Blick auf ihre Komplexität in der Umsetzung aufwendig und kostenintensiv.

Aufgabe der vorliegenden Erfindung ist es, die beschriebenen Nachteile des Standes der Technik zu vermeiden und insbesondere ein landwirtschaftliches Arbeitsfahrzeug gemäß dem Oberbegriff des Anspruchs 1 derart weiterzubilden, dass auch für einen ungeübten Bediener eine schnelle und sichere Optimierung der Einstellparameter der Arbeitsaggregate ermöglicht wird.

Diese Aufgabe wird erfindungsgemäß dadurch gelöst, dass in Abhängigkeit der Beeinflussung einzelner Einstellparameter der Arbeitsaggregate durch einen Bediener eine zu erwartende Änderung der Funktion und/oder des Arbeitsergebnisses einzelner Arbeiteaggregate oder einer Mehrzahl von Arbeitsaggregaten in der Anzeigeeinheit dargestellt wird.

Die Darstellung der zu erwartenden Änderung der Funktion und/oder des Arbeitsergebnisses einzeiner Arbeitsaggregate oder einer Mehrzahl von Arbeitsaggregaten ermöglicht so auch einem unerfahrenen Bediener eine direkte und schnelle Einschätzung der Auswirkungen der durch ihn vorgenommenen Änderung der Einstellparameter der Arbeitsaggregate, ohne dass die Auswirkungen bereits erfassbar wären. Hierbei geht es im Wesentlichen nicht um zahlenmäßig genau definierbare Änderungen der Funktion und/oder des Arbeitsergebnisses, sondern erfindungsgemäβ um eine Visualisierung der Tendenz der zu erwartenden Auswirkungen seines Handelns. Diese direkte und unmittelbare Darstellung der zu erwartenden Auswirkungen leitet den Bediener dann dahingehend an, bei zu erwartenden negativen Auswirkungen die Einstellparameter umgehend zu beeinflussen, so dass er unverzüglich eine positive Funktion und/oder ein positives Arbeitsergebnis einzeiner Arbeitsaggregate oder einer Mehrzahl von Arbeitsaggregaten erzielen kann.

Vorteilhaft wird die zu erwartende Änderung bewertet angezeigt, so dass dem Bediener direkt in der Anzeigeeinheit dargestellt wird, ob seine vorgenommene Beeinflussung der Einstellparameter einen positiven, einen neutralen oder einen negativen Einfluss auf die Funktion und/oder das Arbeltsergebnis einzelner Arbeitsaggregate oder einer Mehrzahl von Arbeitsaggregaten haben wird.

Vorteilhaft sind in der Speichereinheit eine Vielzahl von Einstellparametern mit deren Einfluss auf die Funktion und/oder das Arbeitsergebnis einzelner Arbeitsaggregate oder einer Mehrzahl von Arbeitsaggregaten wiederaufrufbar hinterlegt, die jeweils mit den durch den Bediener beeinflussten aktuellen Einstellparametern verglichen werden, um eine zu erwartende Änderung der Funktion und/oder des Arbeitsergebnisses in der Anzeigeeinheit darzustellen. Somit verfügt die Speichereinheit über einen umfassenden Datenbestand, der dazu dient, bei einer Vielzahl von möglichen Einstellungen der Einstellparameter durch den Bediener die zu erwartende Auswirkung darstellen zu können.

Um den Datenbestand fortlaufend zu vergrößern, und somit auch die Qualität der Aussage über die zu erwartende Änderung der Funktion und/oder des Arbeitsergebnisses zu verbessern, sind bei einer vorteilhaften Weiterbildung der Erfindung von den in der Speichereinheit hinterlegten Einsteilparametern mit deren Einfluss auf die Funktion und/oder das Arbeitsergebnis einzelner Arbeitsaggregate oder einer Mehrzahl von Arbeltsaggregaten abweichende Einsteilparameter und/oder Funktionen und/oder Arbeitsergebnisse wiederaufrufbar in der Speichereinheit speicherbar.

Insbesondere einem ungeübten Bediener des landwirtschaftlichen Arbeitsfahrzeuges werden die zu erwartenden Änderungen visuell schnell und einfach dadurch deutlich, dass die zu erwartende Änderung der Funktion und/oder des Arbeitsergebnisses einzelner Arbeitsaggregate oder einer Mehrzahl von Arbeitsaggregaten in Form von unterschiedlichen Piktogrammen in der Anzeigeeinheit dargestellt werden. Hierbei ist es insbesondere vorteilhaft, wenn in Abhängigkeit der zu erwartenden Änderung der Funktion und/oder des Arbeitsergebnisses einzelner Arbeitsaggregate oder einer Mehrzahl von Arbeitsaggregaten die Form und/oder die Farbe und/oder die Größe der in der Anzeigeeinheit dargestellten Piktogramme unterschiedlich ist. Als mögliche Piktogramme sind in Abhängigkeit der dazustellenden Auswirkung eine Vielzahl an bekannter Formen denkbar wie beispielsweise Ausrufezeichen, Pfeile, lachende Gesichter, weinende Gesichter, stilisierte Hände mit Daumen rauf oder runter, etc. Weiterhin ist es denkbar die Piktogramme in Abhängigkeit der darzustellenden Auswirkung farbig darzustellen, beispielsweise in Rot bei negativen zu erwartenden Auswirkungen und in Grün bei positiven zu erwartenden Auswirkungen.

Um den Bediener nicht mit Informationen zu überfrachten und ihm möglichst schnell die tatsächlich eintretenden Auswirkungen seiner Beeinflussung der Einstellparameter in der Anzeigeeinheit darstellen zu können, wird bei einer vorteilhaften Weiterbildung eine zu erwartende Änderung der Funktion und/oder des Arbeitsergebnisses einzelner Arbeitsaggregate oder einer Mehrzahl von Arbeitsaggregaten nur für ein bestimmtes Zeitintervall in der Anzeigeeinheit dargestellt.

Um das Auffinden der optimalen Einstellparameter insbesondere für einen ungeübten Bediener noch weiter zu vereinfachen, ist eine vorteilhafte Weiterbildung der Erfindung derart ausgebildet, dass in der Speichereinheit eine Mehrzahl von Einstellparametern mit deren Einfluss auf die Funktion und/oder das Arbeitsergebnis einzelner Arbeitsaggregate oder einer Mehrzahl von Arbeitsaggregaten wiederaufrufbar hinterlegt sind, die jeweils mit den durch den Bediener beeinflussen aktuellen Einstellparametern verglichen werden, um eine zu erwartende Änderung der Funktion und/oder des Arbeitsergebnisses in der Anzeigeeinheit darzustellen, und wobei im Falle einer zu erwartenden negativen Änderung der Funktion und/oder des Arbeitsergebnisses dem Bediener zusätzlich in der Speichereinheit hinterlegte Einstellparameter angezeigt werden, die eine positive Änderung der Funktion und/oder des Arbeitsergebnisses bewirken würden. Somit wird ihm nicht nur die Tendenz der zu erwartenden Auswirkungen angezeigt, sondern zusätzlich eine Möglichkeit offenbart, wie die Einstellparameter einzustellen wären, um eine optimale Funktion und/oder ein optimales Arbeitsergebnis zu erreichen.

Insbesondere sehr komplexe landwirtschaftliche Arbeitsmaschinen wie beispielsweise Mähdrescher verfügen über eine Vielzahl von einstellbaren Arbeitsaggregaten, denen eine Vielzahl von Einstellparametern zugeordnet werden können. Um hier nicht für jedes der vielen Arbeitsaggregate die zu erwartende Änderungen anzeigen zu müssen, da die Funktion und/oder das Arbeitsergebnis einzelner Arbeitsaggregate für die Gesamtfunktion und/oder das Gesamtarbeitsergebnis des landwirtschaftlichen Arbeitsfahrzeuges vernachlässigbar sind, kann der Bediener bei einer vorteilhaften Weiterbildung aus einer Mehrzahl von Funktionen und/oder Arbeitsergebnissen einzelner Arbeitsaggregate oder einer Mehrzahl von Arbeitsaggregaten einzelne oder eine Mehrzahl von Funktionen und/oder Arbeitsergebnissen auswählen, deren zu erwartende Änderung in der Anzeigeeinheit dargestellt werden. Somit kann er sich auf die wichtigen Funktionen und/oder Arbeitsergebnisse konzentrieren. Die Auswahl der anzuzeigenden zu erwartenden Änderungen kann sich beispielsweise aus dem aktuellen Arbeitsauftrag der Iandwirtschaftlichen Arbeitsmaschine ergeben. Wenn ein Mähdrescher zum Beispiel Saatkorn ernten soll, ist es insbesondere Wichtig, dass das geerntete Korn eine hohe Reinheit und wenig Bruchkorn aufweist. Bei einem derartigen Arbeitsauftrag werden dann nur die zu erwartenden Änderungen der Funktion und/oder des Arbeitsergebnisses angezeigt, die einen Einfluss auf die genannte Zielsetzung bzw. den genannten Arbeitsauftrag haben. Die Auswahl kann auch extern der Arbeitsmaschine, beispielsweise an einem zentralen Hofrechner getroffen und dann mittels geeigneter Übertragungswege auf die landwirtschaftliche Arbeitsmaschine übertragen werden.

Vorteilhaft kann er die ausgewählten anzuzeigenden zu erwartenden Änderungen gewichtet bewerten, so dass ihm die seine gewünschte Funktionsweise und/oder sein gewünschtes Arbeitsergebnis am stärksten beeinflussenden zu erwartenden Änderungen primär und/oder anders dargestellt werden, als die zu erwartenden Änderungen mit geringerem Einfluss. Zusätzlich ist es denkbar, dass in der Speichereinheit gewisse, die Sicherheit der landwirtschaftlichen Arbeitsmaschine gefährdende Einstellparameter mit deren zu erwartenden Änderungen hinterlegt sind, die unabhängig von einer zu treffenden Auswahl durch den Bediener immer in der Anzeigeeinheit dargestellt werden, wenn der Bediener die Arbeitsaggregate mittels der Einstellparameter dahingehend beeinflusst.

Anhand der beigefügten Zeichnungen wird die Erfindung nachfolgend näher erläutert.

### Es zeigen:

Fig. 1: eine schematische Seitenansicht eines Mähdreschers,
Fig. 2: ein Flussdiagramm des erfindungsgemäßen Prozesses,
Fig. 3a und 3b: Piktogramme für unterschiedliche zu erwartende Änderungen und
Fig. 4a und 4b: die Darstellung einer Anzeigeeinheit.

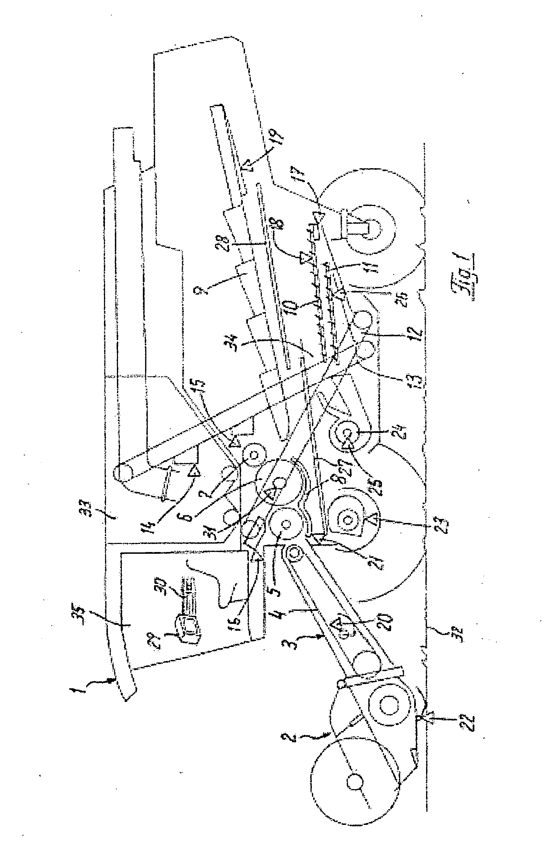

In der Figur 1 wird beispielhaft eine schematisierte Seitenansicht eines als Mähdreschers 1 ausgebildeten ländwirtschaftlichen Arbeitsfahrzeuges gezeigt. Aufgabe eines Mähdreschers 1 ist es, auf Halmen wachsendes Erntegut von einer Bearbeitungsfläche 32 aufzunehmen und von dem Stroh und weiteren Beimengungen zu trennen. Zur Aufnahmen des Erntegutes ist in der Figur 1 beispielsweise ein Getreideschneidwerk 2 dargestellt. Dieses schneidet die Ernteguthalme mit dem in den Ähren befindlichen Erntegut von der Bearbeitungsfläche 32 ab und führt es anschließend auf die Breite als Einzug dienenden Schrägförderers 3 zusammen. In dem Schrägförderer 3 befinden sich umlaufende Einzugsketten 4 mit Querstegen, die das Erntegut den nachgeordneten Dreschaggregaten 5,6 zuführen. Das Erntegut wird von der Vorbeschleunigertrommel 5 am Ende des Schrägförderers 3 abgenommen und entlang des Umfangs der Vorbeschleunigertrommel 5 zwischen der Vorbeschleunigertrommel 5 und dem Dreschkorb 8 beschleunigt. Das beschleunigte Erntegut wird dann an die Dreschtrommel 6 übergeben und weiter beschleunigt Durch die schlagende und reibende Wirkung der Vorbeschleunigertrommel 5 sowie der Dreschtrommel 6 und die auf das Erntegut wirkende Zentrifugalkraft, wird das Erntegut aus den Ähren und vom Stroh getrennt und gelangt dann durch den für das Erntegut durchlässigen Dreschkorb 8 auf den Vorbereitungsboden 27. Das von der Dreschtrommel 6 abgegebene Stroh, wird durch die Wendetrommel 7 abgebremst und auf mehrere über die Arbeitsbreite nebeneinander angeordnete Schüttler 9 umgelenkt. Die Schwingbewegung der Schüttler 9 sowie deren stufenförmige Ausbildung bewirken eine Förderung des Strohs zum hinteren Ende des Mähdreschers hin sowie eine Abscheidung des noch im Stroh befindlichen Erntegutes. Diese Restmenge wird durch den Rücklaufboden 28 und einer Schwingbewegung des selben ebenfalls auf den Vorbereitungsboden 27 übergeben. Das auf dem Vorbereitungsboden 27 befindliche Erntegut mit den weiteren Beimengungen, wie Strohstücke, Spreu und Ährenteile, wird durch eine Schwingbewegung des selben und dessen stufenförmigen Ausbildung separiert und den nachfolgenden Reinigungsaggregaten 10,11,24 zugeführt. Die Übergabe erfolgt über eine von dem Reinigungsgebläse 24 belüftetet Fallstufe 34 auf das Obersieb 10. Dieses sowie das darunter befindliche Untersieb 11 sind in der Regel Lamellensiebe mit jeweils separat einstellbaren Öffnungsweiten, wobei das Obersieb10 im hinteren Bereich mit einer von der restlichen öffnungsweite des Obersiebs 10 unterschiedlichen Öffnungsweite eingestellt werden kann. Das Ober- sowie das Untersieb 10,11 werden von einem von dem Reinigungsgebläse 24 erzeugten Luftstrom durchsetzt. Die Schwingbewegung der Siebe 10,11 sowie der Luftstrom bewirken eine Förderung des Erntegutes sowie deren Beimengungen zum hinteren Ende der Erntemaschine hin. Durch die Fallstufe 34 werden große und leichte Beimengungen von dem Luftstrom, bevor sie das Obersieb 10 erreichen, erfasst und aus dem Mähdrescher 1 abgeschieden. Kleinere und schwerere Erntegutbestandteile gelangen von dem Vorbereitungsboden 27 über die Fallstufe 34 auf das Obersieb 10. Je nach Einstellung der Obersiebweite, fallen die einzelnen Erntegutkörner und weitere Bestandteile des Erntegutes durch dieses hindurch und gelangen so auf das Untersieb 11. Stroh und nicht ausgedroschene Ähren werden über den vorderen Siebbereich hinweg bewegt und fallen im hinteren Bereich des Obersiebes 10 durch das Obersieb 10 direkt in die sogenannte Überkehr. Das Untersieb 11 besitzt in der Regel eine feinere Sieblamellenstruktur als das Obersieb 10 und wird normalerweise mit einer geringeren Öffnungsweite als das Obersieb 10 eingestellt. Größere und leichte Erntegutbestandteile, wie Erntegutkörner mit Spelz, Ährenteile oder Halmteile werden, sofern sie durch das Obersieb 10 auf das Untersieb 11 gelangt sind, durch die Schwingbewegung und den Luftstrom in die sogenannte Überkehr übergeben. Das gereinigte Erntegut selbst fällt direkt durch das Untersieb 11 hindurch und wird mittels einer Zuführschnecke und dem Kornelevator 13 in den Korntank 33 gefördert. Das in die Überkehr gelangte Erntegut wird mittels einer Zuführschnecke und dem Überkehrelevator 12 oberhalb der Vorbeschleunigertrommel 5 erneut dem Dreschprozess zugeführt.
Der Mähdrescher 1 ist mit einer Fahrerkabine 35 ausgestattet, in welcher eine Anzeigeeinheit 29 sowie eine Steuereinheit 30 mit integrierter Speichereinheit angeordnet sind. Ferner sind dort nicht näher dargestellte, dem Fachmann bekannte Einrichtung zur Vorgabe der Fahrtrichtung und Fahrgeschwindigkeit des Mähdreschers 1 vorhanden. Die Anzeigeeinheit 29 sowie die Steuereinheit 30 stehen mit in dem Mähdrescher 1 an verschiedenen Orten angeordneten einzelnen Sensoren und Aktoren in Verbindung. Der Bediener des Mähdreschers 1 erhält hierdurch die Möglichkeit, die Einstellparameter der einzelnen Arbeitsaggregate und somit die Funktionsweise des Mähdreschers 1 einstellen und überwachen zu können. In der Figur 1 werden durch Pfeilspitzen die einzelnen Stellen in dem Mähdrescher 1 angedeutet, an welchen ein Sensor zur Ermittlung von Prozess- und Einstellparameter angeordnet ist. Die jeweiligen Aktoren zur Einstellung des Mähdreschers 1 sind dem Fachmann ausreichend bekannt, so dass in Figur 1 auf die Darstellung des jeweiligen Elementes verzichtet werden kann.
An der Antriebsachse des Mähdreschers 1 ist eine Fahrgeschwindigkeitsmesseinrichtung 23 angeordnet, die die jeweilige Fahrgeschwindigkeit erfasst. Dem Schneidwerk 2 ist eine Schnitthöhenmesseinrichtung 22 zugeordnet. Diese dient der Ermittlung des tatsächlichen Abstandes zwischen dem Schneidwerk 2 und der Bearbeitungsfläche 32. Der sensierte Wert kann mittels der Anzeigeinheit 29 dem Bediener angezeigt und ferner als Istwert für eine automatische Schnitthöhenregelung verwendet werden.
Zur Erfassung der Erntemenge ist in dem Schrägförderer 3 eine Erntemengenmesseinrichtung 20 angebracht. Diese ermittelt die von der Erntemenge abhängige Auslenkung einer Einzugskette 4.

Eine weitere Sensorik ist an dem Dreschkorb 8 angeordnet. Diese Dreschkorbweitenmesseinrichtung 21 ist einfach oder mehrfach ausgebildet und ermittelt den Abstand zwischen der Vorbeschleunigertrommel 5 und dem Dreschkorb 8 und/oder der Dreschtrommel 5 und dem Dreschkorb 8 an einer oder mehreren Stellen.
Die Vorbeschleunigertrommel 5, die Dreschtrommel 6 und die Wendetrommel 7 werden in der Regel von einem gemeinsamen Antrieb angetrieben, wobei die Drehzahlen der Trommeln 5,6,7 über einen Stellantrieb variiert werden kann. Diesen Trommeln 5,6,7 ist eine Dreschtrommeldrehzahlmesseinrichtung 31 zur Erfassung zumindest einer der Trommeldrehzahlen zugeordnet.
Zur Erzeugung unterschiedlicher Luftströme durch die Reinigungseinrichtung ist der Antrieb des Reinigungsgebläses 24 drehzahlvariabel ausgeführt. Die tatsächliche Drehzahl des Reinigungsgebläses 24 wird mittels einer Reinigungsgebläsemesseinrichtung 25 erfasst.
Der Reinigungseinrichtung können weitere Sensoren zugeordnet sein. So lässt sich auch die jeweilige Sieböffnungsweite durch eine Obersiebweitenmesseinrichtung 18 und eine Untersiebweitenmesseinrichtung 26 erfassen. Diese Messeinrichtungen 18,26 können Teil der jeweiligen nicht dargestellten Einstelleinrichtung oder separat ausgeführt und jeweils am Sieb 10,11 angeordnet sein. Am hinteren Ende des Obersiebes 10 ist eine Obersiebverlustmesseinrichtung 17 angeordnet. Hiermit lassen sich anteilig die Erntegutkörner erfassen, die über die Reinigungseinrichtung hinweg den Mähdrescher 1 verlassen und als Verluste verloren gehen. Derartige Sensoren sind dem Fachmann bekannt und erstrecken sich teilweise oder komplett über die Arbeitsbreite der Reinigungseinrichtung. Sie sind normalerweise als Prallplatte oder - rohr ausgebildet und werten die Schwingungen aus, die durch Aufprall von Erntegutkörnern auf die Platte oder Röhre erzeugt werden. Diese Sensortechnik kann ferner an jeder beliebigen Stelle in einem Mähdrescher 1 eingesetzt und angeordnet werden. Hierdurch lassen sich dann Erntegutkörnerströme erfassen und ermöglichen zumindest eine vergleichende und relative Aussage über die am Einsatzort herrschenden Körnermengen. So wird diese Sensortechnik auch in den Schüttlern 9 zur Erfassung der Abscheidung eingesetzt. Um eine Aussage über die noch im Stroh befindlichen Erntegutkörner zu erhalten, ist zumindest am hinteren Ende eines Schüttlers 9 ein Schüttlerverlustsensor 19 befestigt. Dieser erfasst anteilig die noch am Ende des Schüttlers 9 abgeschiedene Erntegutkörner. Auch zur Beurteilung der Erntegutkörnermenge in der Überkehr lässt sich eine solche Prallplatten- Sensorik am Ende des Untersiebes 11 oder an der Stelle der Rückführung der Überkehr in den Dreschprozess anordnen.
Zur Beurteilung der in der Überkehr befindlichen Erntegutbestandteile ist eine Überkehrmesseinrichtung 16 am oberen Ende des Überkehrelevators 12 angeordnet. Hiermit lassen sich das Überkehrvolumen, der Korn- und der Bruchkornanteil bestimmen. Bekannt sind hierfür optische Lichtschranken, optische Sensoren oder Durchleuchtungssensoren (NIR- Sensoren).
Der Kornelevator 13 ist mit weiteren Sensoren 14,15 ausgestattet, welche die Ermittlung der Fördermenge durch ein Ertragsmesssystem 14 sowie die Ermittlung des spezifischen Gewichtes des Erntegutes durch eine Kalibrierwaage 15 erlauben.

Wie anhand der vorstehenden Beschreibung der Funktionsweise des Mähdreschers 1 zu erkennen ist, bestehen für den Bediener des Mähdreschers 1 eine Vielzahl von Möglichkeiten, Einstellparameter der einzelnen Arbeitsaggregate zu beeinflussen.

Unter "Arbeitsaggregat" werden im Sinne der Erfindung sämtliche Bauelemente und/oder Steuerelemente eines landwirtschaftlichen Arbeitsfahrzeuges verstanden, die eine bestimmte Funktion zur Erreichung eines Arbeitsergebnisses der Arbeitsmaschine erfüllen. Diese Arbeitsaggregate können am vorgenannten Beispiel des Mähdreschers 1 beispielhaft das Getreideschneidwerk 2, der Schrägförderer 3, die Einzugsketten 4, die Vorbeschleunigertrommel 5, die Dreschtrommel 6, die Wendetrommel 7, der Dreschkorb 8, die Schüttler 9, das Obersieb 10, das Untersieb 11, der Überkehrelevator 12, der Kornelevator 13, das Reinigungsgebläse 24, der Vorbereitungsboden 27 und/oder der Rücklaufboden 28 sein. Auch eine Gruppe von zusammenwirkenden Einzelarbeitsaggregaten werden im Sinne der Erfindung als Arbeitsaggregat bezeichnet. Dies kann beispielsweise die durch das Obersieb 10, das Untersieb 11 und das Reinigungsgebläse 24 gebildete Reinigungseinrichtung des Mähdreschers 1 sein. Aber auch die unterschiedlichen in der Arbeitsmaschine befindlichen Sensoren und Messsysteme, wie beispielsweise das Ertragsmesssystem 14, die Kalibrierwaage 15, die Überkehrmesseinrichtung 16, die Obersiebverlustmesseinrichtung 17, die Obersiebweitenmesseinrichtung 18, der Schüttlerverlustsensor 19, die Erntemengenmesseinrichtung 20, die Dreschkorbweitenmesseinrichtung 21, die Schnitthöhenmesseinrichtung 22, die Fahrgeschwindigkeitsmesseinrichtung 23, die Reinigungsgebläsemesseinrichtung 25, die Untersiebweitenmesseinrichtung 26 und/oder die Dreschtrommeldrehzahlmesseinrichtung 31, sind im Sinne der Erfindung als Arbeitsaggregate anzusehen.

Unter "Einstellparameter" werden im Sinne der Erfindung jedwede Möglichkeiten zur Beeinflussung der Arbeitsaggregate der landwirtschaftlichen Arbeitsmaschine verstanden. Dies kann die Vorgabe einer bestimmten Drehzahl und/oder einer bestimmten Frequenz und/oder einer bestimmten Geschwindigkeit und/oder eines bestimmten Abstandes und/oder ein bestimmter Druck und/oder einer bestimmten Erntegutdurchsatzmenge eines Arbeitsaggregates sein, um nur einige mögliche Vorgaben zu nennen. Unter Einstellparameter ist aber beispielsweise auch die Einstellung der in der landwirtschaftlichen Arbeitsmaschine befindlichen Sensoren und Messeinrichtungen zu verstehen. Dies kann beispielhaft die Vorgabe einer bestimmten Empfindlichkeit eines Sensors oder eine bestimmte Zeitabfolge in der ein Messvorgang erfolgt oder ein vorgegebener Korrekturwert zur Beeinflussung der Messergebnisse eines Sensors oder einer Messeinrichtung sein, wobei auch diese Auflistung nur beispielhaft und nicht abschließend anzusehen ist.

Unter "Bediener" wird im Sinne der Erfindung diejenige Person oder eine Mehrzahl von Personen verstanden, die Einstellparameter der Arbeitsaggregate eines landwirtschaftlichen Arbeitsfahrzeuges beeinflussen können, und denen eine zu erwartende Änderung der Funktion und/oder des Arbeitsergebnisses einzelner Arbeitsaggregate oder einer Mehrzahl von Arbeitsaggregaten angezeigt wird. Dies kann der Fahrer des landwirtschaftlichen Arbeitsfahrzeuges selbst sein und/oder ein Fahrer eines anderen landwirtschaftlichen Arbeitsfahrzeuges, der mittels geeigneter Übertragungsmittel einen autorisierten Zugriff auf die Steuereinheit des einzustellenden Arbeitsfahrzeuges hat und/oder ein weiterer Personenkreis, wie beispielsweise ein Landwirt von seinem Hofrechner aus, der mittels geeigneter Übertragungsmittel einen autorisierten Zugriff auf die Steuereinheit des einzustellenden Arbeitsfahrzeuges hat. Diese Auflistung der möglichen Bediener ist beispielhaft und nicht als abschließend anzusehen.

Um die Erfindung näher zu erläutern, wird im Folgenden beispielhaft nur auf einen Teilbereich der Arbeitsaggregate und der Funktionen des in Figur 1 gezeigten Mähdreschers 1 eingegangen.
Ziel eines Arbeitsauftrages könnte es beispielsweise sein, ein Getreidefeld abzuernten, wobei die geernteten Erntegutkörner als Saatgut für die Anbaukampagne der folgenden Saison dienen sollen. Derartige als Saatgut dienende Erntegutkörner müssen eine hohe Reinheit aufweisen, sprich der Anteil an anderen Erntegutbestandteilen wie Erntegutkörner mit Spelz, Ährenteile oder kleine Strohteilchen im Korntank 33 sollte möglichst gering sein. Weiterhin ist es wichtig, dass der Anteil an Bruchkorn, also während des Ernte-, Drusch- und/oder Reinigungsprozesses zerstörten Erntegutkörnern sehr gering ist, da derartige Körner nicht zu Saatgut weiterverarbeitet werden können. Um die Kosten zum Ernten von derartigem Saatgut jedoch in Grenzen zu halten, ist es zusätzlich wichtig, dass die Bearbeitungsfläche 32 mit möglichst geringem Zeitaufwand abgeerntet wird und die Verlustmenge, sprich die nicht ausgedroschenen oder in der Reinigungseinrichtung ausgeschiedenen Erntegutkörner gering gehalten wird. Um dieses Ziel zu erreichen, müssen eine Vielzahl von Arbeitsaggregaten mit auf die jeweiligen Erntebedingungen abgestimmten Einstellparametern eingestellt sein, was insbesondere ungeübte Bediener häufig überfordert.
Wenn der Bediener beispielsweise feststellt oder ihm angezeigt wird, dass die Oberkehrmenge sehr hoch ist, wird er beispielsweise die Dreschkorbweite, also den Abstand zwischen Vorbeschleunigertrommel 5 und Dreschkorb 8 und/oder den Abstand zwischen Dreschtrommel 6 und Dreschkorb 8 verringern, um einen aggressiveren Druschprozess zu erzielen und somit die Menge an ausgedroschenen Erntegutkörnern zu erhöhen, wodurch die Überkehrmenge sinkt. Ist die Dreschkorbweite zu gering eingestellt, so führt dies jedoch aufgrund des aggressiven Druschprozesses zwangsläufig zu einer Erhöhung der Bruchkornmenge. Da dies jedoch nicht unmittelbar durch Sensoren und/oder den Bediener erfasst werden kann und insbesondere ein in Abhängigkeit der Zielvorgaben des jeweiligen Arbeitsauftrages optimaler Kompromiss zwischen Erntegutkörnerreinheit, Überkehrmenge und Bruchkornmenge gefunden werden muss, überprüft die Steuereinheit 30 unmittelbar, ob in der verbundenen Speichereinheit die eingestellte Dreschkorbweite sowie die dazugehörigen Einstellparameter der weiteren Arbeitsaggregate und die Sensorwerte der einzelnen Sensoren des Mähdreschers 1 hinterlegt sind. Sollte dies der Fall sein, wird die Tendenz der zu erwartenden Auswirkung der vorgenommenen Einstellung in der Anzeigeeinheit 29 dargestellt. Alternativ ist ein entsprechender Algorithmus in der Steuereinheit hinterlegt, der die Tendenz der zu erwartenden Auswirkung der vorgenommenen Einstellung berechnet, welche dann in der Anzeigeeinheit 29 dargestellt wird. Diese angezeigte Tendenz könnte beispielweise ein Symbol für eine zu erwartende sehr hohe Bruchkornmenge sein, so dass der Bediener intuitiv weiß, dass er die Dreschkorbweite zu gering eingestellt hat. Zu diesem Zeitpunkt hat noch keine oder nur eine sehr geringe Erntegutmenge den Dreschbereich durchlaufen, so dass bei einer unmittelbaren Vergrößerung der Dreschkorbweite durch den Bediener nur ein sehr geringer negativer Einfluss auf die im Erntegut befindliche Bruchlcornmenge erfolgt ist. Wenn der Bediener die Dreschkorbweite dann vergrößert, beginnt die Steuereinheit 30 erneut unmittelbar mit der Überprüfung der in der Speichereinheit hinterlegten Daten und/oder mit der Berechung gemäß des hinterlegten Algorithmus, so dass dem Bediener im Falle einer zu großen Dreschkorbweite in der Anzeigeeinheit 29 unmittelbar ein Symbol angezeigt wird, dass die Überkehrmenge tendenziell ansteigen wird. Nun besteht für den Bediener die Möglichkeit, die Dreschkorbweite in kleinen Schritten zu verändern, bis ein optimalre Kompromiss zwischen Bruchkornmenge, Erntegutkörnerreinheit und Überkehrmenge gefunden ist. Alternativ ist es denkbar, dass ihm in der Anzeigeeinheit 29 nicht nur die Tendenz der zu erwartenden Auswirkung seiner Einstellung angezeigt wird, sondern zusätzlich die Steuereinheit 30 anhand von hinterlegten Datensätzen und/oder eines Berechnungsergebnisses Vorschläge zu einer optimaleren Einstellung erzeugt und diese in der Anzeigeeinheit 29 anzeigt. Diese Vorschläge können sowohl konkrete Zahlenwerte für den Einstellparameter als auch quantitative Aussagen wie beispielsweise "Dreschkorbweite verringern" und/oder entsprechende Symbole sein.
Wenn der Bediener alternativ beispielsweise feststellt oder ihm angezeigt wird, dass die Reinheit der in den Korntank 33 geförderten Erntegutkörner sehr schlecht ist und somit nicht den Zielvorgaben des Arbeitsauftrages entspricht, wird er beispielsweise die Sieböffnungsweite des Obersiebes 10 und/oder des Untersiebes 11 verringern, so dass eine geringere Menge von Errtegutbestandteilen durch das Obersieb 10 und/oder das Untersieb 11 hindurch in den Kornelevator 13 und somit in den Korntank 33 gelangen können. Ist die Sieböffnungsweite des Obersiebes 10 und/oder des Untersiebes 11 jedoch zu gering eingestellt, so führt dies zwangsläufig dazu, dass die Verlustmenge, sprich die aus der Reinigungseinrichtung ausgeschiedenen Erntegutkörner, ansteigt, da die Sieböffnungsweite überragende Ähren mit darin befindlichen nicht ausgedroschenen Erntegutkörnern und/oder größere Erntegutkörner nicht durch die Lamellen der Siebe 10,11 gelangen können. Da dies jedoch nicht unmittelbar durch Sensoren und/oder den Bediener erfasst werden kann und insbesondere ein in Abhängigkeit der Zielvorgaben des jeweiligen Arbeitsauftrages optimaler Kompromiss zwischen Reinheit des Erntegutes und Reinigungsverlustmenge gefunden werden muss, überprüft die Steuereinheit 30 unmittelbar, ob in der verbundenen Speichereinheit die eingestellte Sieböffnungsweite der Sieblamellen des Obersiebes 10 und/oder des Untersiebes 11 sowie die dazugehörigen Einstellparameter der weiteren Arbeitsaggregate und die Sensorwerte der einzelnen Sensoren des Mähdreschers 1 hinterlegt sind. Sollte dies der Fall sein, wird die Tendenz der zu erwartenden Auswirkung der vorgenommenen Einstellung in der Anzeigeeinheit 29 dargestellt. Alternativ ist ein entsprechender Algorithmus in der Steuereinheit hinterlegt, der die Tendenz der zu erwartenden Auswirkung der vorgenommenen Einstellung berechnet, welche dann in der Anzeigeeinheit 29 dargestellt wird. Diese angezeigte Tendenz könnte beispielweise ein Symbol für eine zu erwartende sehr hohe Reinigungsverlustmenge sein, so dass der Bediener intuitiv weiß, dass er die Sieböffnungsweite zu gering eingestellt hat. Zu diesem Zeitpunkt hat noch keine oder nur eine sehr geringe Erntegutmenge die Reinigungseinrichtung durchlaufen, so dass bei einer unmittelbaren Vergrößerung der Sieböffnungsweite durch den Bediener nur ein sehr geringer negativer Einfluss auf die Reinigungsverlustmenge erfolgt ist. Wenn der Bediener die Sieböffnungsweite dann vergrößert, beginnt die Steuereinheit 30 erneut unmittelbar mit der Überprüfung der in der Speichereinheit hinterlegten Daten und/oder mit der Berechung gemäß des hinterlegten Algorithmus, so dass dem Bediener im Falle einer zu großen Sieböffnungsweite in der Anzeigeeinheit 29 unmittelbar ein Symbol angezeigt wird, dass die Reinheit des Erntegutes tendenziell abnehmen wird. Nun besteht für den Bediener die Möglichkeit, die Sieböffnungsweite in kleinen Schritten zu verändern, bis ein optimaler Kompromiss zwischen Reinigungsverlustmenge und Reinheit des Erntegutes gefunden ist. Alternativ ist es denkbar, dass ihm in der Anzeigeeinheit 29 nicht nur die Tendenz der zu erwartenden Auswirkung seiner Einstellung angezeigt wird, sondern zusätzlich die Steuereinheit 30 anhand von hinterlegten Datensätzen und/oder eines Berechnungsergebnisses Vorschläge zu einer optimaleren Einstellung erzeugt und diese in der Anzeigeeinheit 29 anzeigt. Diese Vorschläge können sowohl konkrete Zahlenwerte für den Einstellparameter als auch quantitative Aussagen wie beispielsweise "Sieböffnungsweite verringern" und/oder entsprechende Symbole sein. Wenn der Bediener alternativ beispielsweise feststellt oder ihm angezeigt wird, dass die Reinheit der in den Korntank 33 geförderten Erntegutkörner sehr schlecht ist und somit nicht den Zielvorgaben des Arbeitsauftrages entspricht, wird er beispielsweise die Drehzahl des Reinigungsgebläses 24 erhöhen, so dass eine größere Menge von Erntegutbestandteilen mittels des Luftstromes aus der Reinigungseinrichtung abgeschieden werden. Ist die Drehzahl des Reinigungsgebläses 24 jedoch zu hoch eingestellt, so führt dies zwangsläufig dazu, dass die Verlustmenge, sprich die aus der Reinigungseinrichtung ausgeschiedenen Erntegutkörner, ansteigt, da auch kleine und leichte Erntegutkörner von dem Luftstrom mitgerissen und aus dem Mähdrescher 1 geblasen werden. Da dies jedoch nicht unmittelbar durch Sensoren und/oder den Bediener erfasst werden kann und insbesondere ein in Abhängigkeit der Zielvorgaben des jeweiligen Arbeitsauftrages optimaler Kompromiss zwischen der Reinheit des Erntegutes und der Reinigungsverlustmenge gefunden werden muss, überprüft die Steuereinheit 30 unmittelbar, ob in der verbundenen Speichereinheit die eingestellte Gebläsedrehzahl des Reinigungsgebläses 24 sowie die dazugehörigen Einstellparameter der weiteren Arbeitsaggregate und die Sensorwerte der einzelnen Sensoren des Mähdreschers 1 hinterlegt sind. Sollte dies der Fall sein, wird die Tendenz der zu erwartenden Auswirkung der vorgenommenen Einstellung in der Anzeigeeinheit 29 dargestellt. Alternativ ist ein entsprechender Algorithmus in der Steuereinheit hinterlegt, der die Tendenz der zu erwartenden Auswirkung der vorgenommenen Einstellung berechnet, welche dann in der Anzeigeeinheit 29 dargestellt wird.

Diese angezeigte Tendenz könnte beispielweise ein Symbol für eine zu erwartende sehr hohe Reinigungsverlustmenge sein, so dass der Bediener intuitiv weiß, dass er die Gebläsedrehzahl zu hoch eingestellt hat. Zu diesem Zeitpunkt hat noch keine oder nur eine sehr geringe Erntegutmenge die Reinigungseinrichtung durchlaufen, so dass bei einer unmittelbaren Verringerung der Gebläsedrehzahl durch den Bediener nur ein sehr geringer negativer Einfluss auf die Reinigungsverlustmenge erfolgt ist. Wenn der Bediener die Gebläsedrehzahl dann verringert, beginnt die Steuereinheit 30 erneut unmittelbar mit der Überprüfung der in der Speichereinheit hinterlegten Daten und/oder mit der Berechung gemäß des hinterlegten Algorithmus, so dass dem Bediener im Falle einer zu niedrigen Gebläsedrehzahl in der Anzeigeeinheit 29 unmittelbar ein Symbol angezeigt wird, dass die Reinheit des Erntegutes tendenziell abnehmen wird. Nun besteht für den Bediener die Möglichkeit, die Gebläsedrehzahl in kleinen Schritten zu verändern, bis ein optimaler Kompromiss zwischen Reinigungsverlustmenge und Reinheit der Erntegutkörner gefunden ist. Alternativ ist es denkbar, dass ihm in der Anzeigeeinheit 29 nicht nur die Tendenz der zu erwartenden Auswirkung seiner Einstellung angezeigt wird, sondern zusätzlich die Steuereinheit 30 anhand von hinterlegten Datensätzen und/oder eines Berechnungsergebnisses Vorschläge zu einer optimaleren Einstellung erzeugt und diese in der Anzeigeeinheit 29 anzeigt. Diese Vorschläge können sowohl konkrete Zahlenwerte für den Einstellparameter als auch quantitative Aussagen wie beispielsweise "Gebläsedrehzahl verringern" und/oder entsprechende Symbole sein.
Ein weiterer erfindungsgemäße Einstellprozessablauf bezieht sich auf die Einstellung eines automatischen Lenksystems des Mähdreschers 1. Diese automatische Lenksystem ist beispielhaft GPS-basiert, so dass es automatisch abzufahrende Leitlinien für den Mähdrescher 1 erzeugt. Bei der Erzeugung der Leitlinien berücksichtigt das Lenksystem unter anderem die Arbeitsbreite des Getreideschneidwerkes 2 um dieses optimal auszunutzen. Nun hat sich in der Praxis gezeigt, dass nicht immer die volle Arbeitsbreite des Getreideschneidwerkes 2 ausgenutzt werden sollte, da sonst an der Bestandskante des Erntegutes sich nach Außen neigende Ähren nicht mehr geerntet werden würden. Um dieser Problemstellung gerecht zu werden, muss bei dem Lenksystem eine gewisse Querabweichung, sprich eine Verschiebung der zu verfolgenden Leitlinie gegenüber der berechneten Leitlinie, eingestellt werden. Dies kann mittels eines sogenannten Mittenverstellers erfolgen. Bei der Einstellung der Querabweichung sind zusätzlich eine Reihe von Randbedingungen wie beispielsweise Hangneigung, Signaldrift der Positionsangaben, falsch kalibrierter GPS-Empfänger und/oder falsch eingestellte Arbeitsbreite des Getreideschneidwerkes 2 zu beachten, was insbesondere einem ungeübten Bediener schwer fällt Wenn der Bediener nun den Mittenversteller betätigt, berechnet ein in der Steuereinheit 30 hinterlegter Algorithmus die Auswirkungen der Querabweichung im Bezug auf die vom Lenksystem erzeugte Leitlinie und in der Anzeigeeinheit 29 wird sowohl die vom Lenksystem erzeugte Leitlinie als auch die durch den Mittenversteller beeinflusste Leitlinie angezeigt, so dass der Bediener intuitiv erkennt, welche Auswirkungen die vorgenommene Mittenverstellung auf die Spurverfolgung des automatischen Lenksystems des Mähdreschers haben wird. Zur Verdeutlichung der Anzeige können die Leitlinie unterschiedlich farbig in der Anzeigeeinheit dargestellt werden. Eine derartige Anzeige der zu erwartenden Auswirkung in der Anzeigeeinheit 29 kann ohne entsprechend dargestellte positive oder negative Bewertung erfolgen, sondern der Bediener erhält lediglich eine Information darüber, was seine Einstellung bewirken wird. Die entsprechenden Rückschlüsse kann der Bediener dann selbständig ziehen. Die vier vorstehend erwähnten Einstellprozessabläufe am Beispiel eines als Mähdreschers ausgebildeten landwirtschaftlichen Arbeitsfahrzeuges stehen nur beispielhaft für unzählige Einstellprozessabläufe an landwirtschaftlichen Arbeitsfahrzeugen und grenzen die Erfindung nicht auf die beschriebenen Abläufe ein.

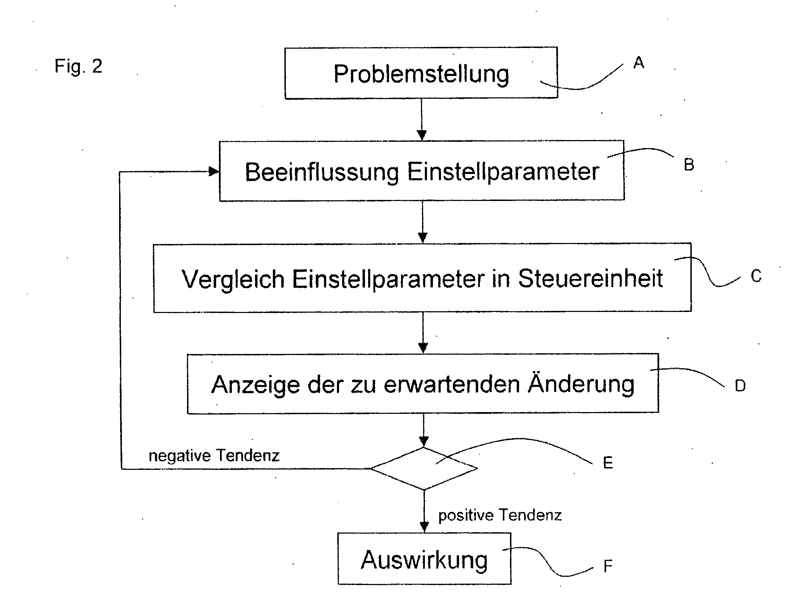

In Figur 2 wird ein Flussdiagramm des erfindungsgemäßen Prozesses dargestellt. Zum Beginn des Prozesses erfasst der Bediener eine Problemstellung A, wie beispielsweise "Verlustmenge zu hoch", so dass er die entsprechenden Einstellparameter beeinflusst B. Gemäß dem gewählten Beispiel wäre hier die Dreschkorbweite zu verringern. Im folgenden Prozessfeld C vergleicht die Steuereinheit die eingestellten Einstellparameter, hier die eingestellte Dreschkorbweite, mit in der Speichereinheit hinterlegten Einstellparametern. Neben den Einstellparametern werden zum Beispiel zusätzlich die aktuell erfassten Sensorwerte mit den zu den hinterlegten Einstellparametern hinterlegten Sensorwerten verglichen. Im nächsten Prozessschritt D wird dann zumindest eine Tendenz der aufgrund der vorgenommenen Einstellung zu erwartenden Änderung der Funktion und/oder des Arbeitsergebnisses angezeigt. Alternativ ist es denkbar, dass in der Steuereinheit ein entsprechender Algorithmus hinterlegt ist, der die Tendenz der zu erwartenden Änderung berechnet. Gemäß dem Bespiel würde beispielsweise angezeigt, dass sich die Bruchkornmenge unverhältnismäßig stark erhöhen wird, was als negative Tendenz zu werten ist. Im Falle einer angezeigten negativen Tendenz wird der Bediener im Prozessschritt E intuitiv entscheiden, dass er die vorgenommene Einstellung nochmals verändern muss, so dass er zu Prozessfeld B zurückkehrt. Die Schritte B > C > D > E wird der Bediener solange durchlaufen, bis ihm im Schritt D eine positive Tendenz angezeigt wird, welche dann schlussendlich dazu führt, dass er die Einstellparameter beibehält und diese Auswirkungen F auf die Funktion und/oder das Arbeitsergebnis der Arbeitsaggregate haben.

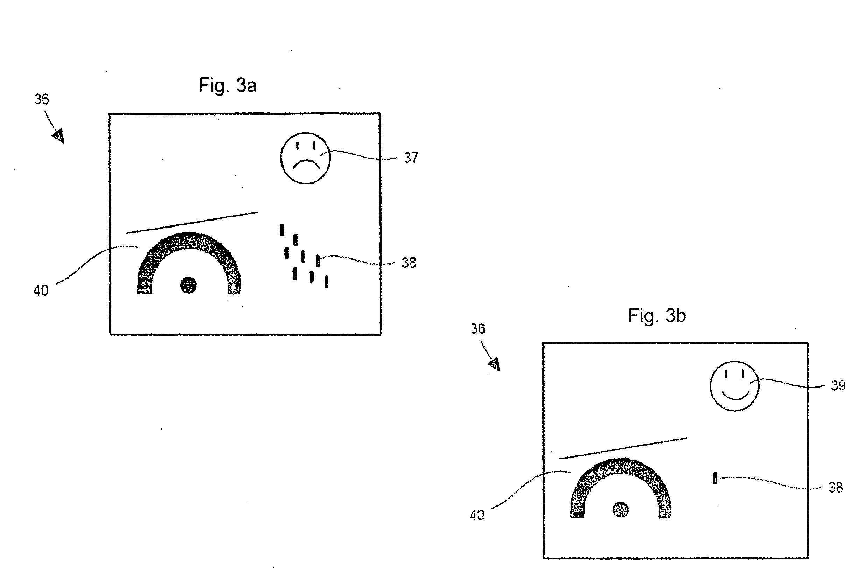

In den Figuren 3a und 3b sind beispielhaft zwei Piktogramme 36 dargestellt, die im Falle eines weiter oben beschriebenen Beispiels in der Anzeigeeinheit 29 darstellbar sind. Wenn der Bediener beispielsweise zur Erreichung einer hohen Erntegutkornreinheit die Gebläsedrehzahl des Reinigungsgebläses 24 zu hoch einstellt, würde dies dazu führen, dass mehr Erntegutkörner durch den Gebläseluftstrom über das Ober- oder das Untersieb 11,12 hinweg aus dem Mähdrescher 1 geblasen würden, was mittels der Ober- und Untersiebverlustmesseinrichtungen 12,26 sensiert würde. Zwischen der Verstellung der Drehzahl und der Sensierung durch die Messeinrichtungen vergeht jedoch eine gewisse Zeit, in der eine bestimmte Erntegutmenge die Reinigungseinrichtung durchläuft. Um zu verhindern, dass es erst dazu kommt, dass die Verlustmenge ansteigt, wird dem Bediener unmittelbar nach der Erhöhung der Gebläsedrehzahl das Piktogramm 36 gemäß Fig. 3a in der Anzeigeeinheit 29 angezeigt, da die Steuereinheit 30 aufgrund der in der Speichereinheit hinterlegten Daten weiß, dass höhere Verluste zu erwarten sind. Durch das stilisierte Gesicht mit negativen Gesichtsausdruck 37 und eine hohe Anzahl an dargestellten Verlustkörnern 38 neben einem Symbol 40 der Reinigungseinrichtung erfasst der Bediener intuitiv, dass seine vorgenommene Einstellung einen negativen Einfluss auf das Arbeitsergebnis der Reinigungseinrichtung haben wird. Somit besteht für ihn die Möglichkeit, direkt die Gebläsedrehzahl zu verringern. Wenn er den für das Arbeitsergebnis der Reinigungseinrichtung optimalen Einstellparameter der Drehzahl des Reinigungsgebläses 24 gefunden hat, wird ihm in der Anzeigeeinheit 29 wiederum ein Piktogramm 36 angezeigt, welches beispielsweise der Fig. 3b entspricht. Durch das stilisierte Gesicht mit positiven Gesichtsausdruck 39 und die geringe Anzahl an dargestellten Verlustkörnern 38 neben einem Symbol 40 der Reinigungseinrichtung erfasst der Bediener nun wiederum intuitiv, dass der eingestellte Einstellparameter optimal ist.
Die intuitive Erfassung der zu erwartenden Änderungen kann weiter dadurch verbessert werden, dass das Piktogramm 36 gemäß Fig. 3a in Rot und das Piktogramm gemäß Fig. 3b in Grün dargestellt wird. Weiterhin ist es im Rahmen der Erfing auch denkbar, dass neben den beiden Extremen gemäß Figur 3a und Figur 3b auch weitere Piktogramme angezeigt werden, die Zwischenstufen zwischen den beiden Extremen symbolisieren. So könnte beispielsweise bei weiteren Piktogramme die Anzahl der dargestellten Verlustkörner 38 schrittweise von Figur 3a zu Figur 3b hin abnehmen, so dass der Bediener auch bei kleinen Veränderungen der Gebläsedrehzahl erfassen kann, welcher Einfluss aufgrund der vorgenommenen Veränderung zu erwarten ist.

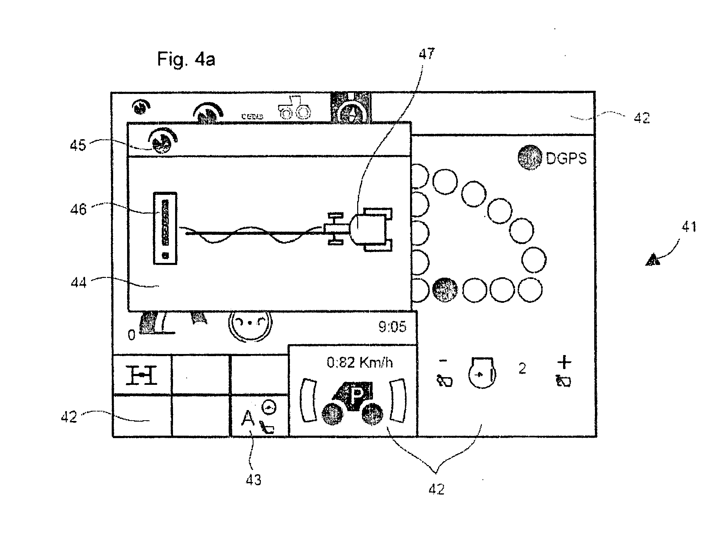

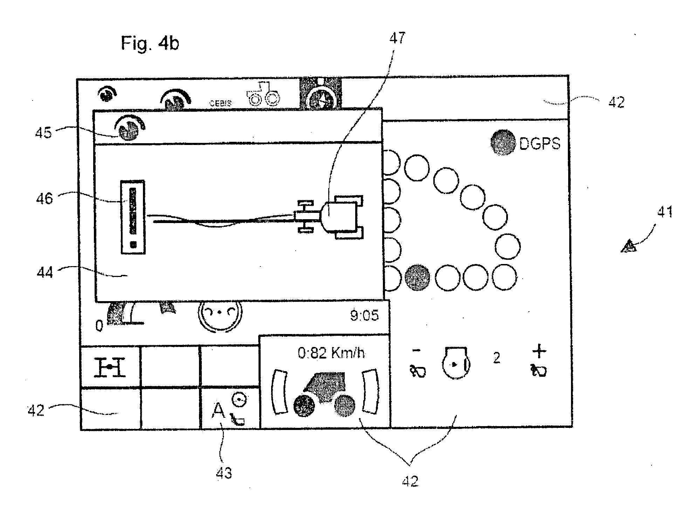

Die Figuren 4a und 4b zeigen beispielhaft die Bildschirmdarstellung 41 einer Anzeigeeinheit eines nicht näher dargestellten als Traktor ausgebildeten landwirtschaftlichen Arbeitsfahrzeuges. Die Bildschirmdarstellung 41 ist in mehrere unterschiedliche Bereiche 42 eingeteilt in denen verschiedenste Einstellparameter der Arbeitsaggregate und/oder erfasste Sensorwerte und/oder weitere Einstellungen des Traktors dargestellt werden. In dem Bereich 43 wird beispielhaft angezeigt, dass sich der Traktor in einem Automatiklenkmodus mittels eines GPS-basierten Spurführungssystems befindet. Nun besteht für den Bediener die Möglichkeit, den Einstellparameter der Aggressivität der Spurverfolgung zu beeinflussen. Wenn er die Aggressivität verändert, wird die Bildschirmdarstellung 41 bereichsweise von einem Piktogramm 44 überblendet, das die zu erwartenden Änderung des Fahrverhaltens des Traktors symbolisiert.
In Figur 4a ist ein Piktogramm 44 dargestellt, welches eine negative zu erwartende Änderung des Fahrverhaltens des Traktors symbolisiert. Damit der Bediener dieses schnell und intuitiv erfasst, beinhaltet des Piktogramm 44 ein Symbol 45 für die Lenkaggressivitätsverstellung, ein Symbol 47 für einen Traktor und dessen Spurverhalten mit hoher Aggressivität, sowie ein Rot dargestelltes Ausrufezeichen 46. Somit erfasst der Bediener direkt, dass seine vorgenommene Änderung des Einstellparameters einen negativen Einfluss haben wird, so dass er den Einstellparameter nochmals ändern wird.
In Figur 4b ist ein Piktogramm 44 dargestellt, welches eine positive zu erwartende Änderung des Fahrverhaltens des Traktors symbolisiert. Damit der Bediener dieses schnell und intuitiv erfasst, beinhaltet des Piktogramm 44 ein Symbol 45 für die Lenkaggressivitätsverstellung, ein Symbol 45 für einen Traktor und dessen Spurverhalten mit niedriger Aggressivität, sowie ein Grün dargestelltes Ausrufezeichen 46. Somit erfasst der Bediener direkt, dass seine vorgenommene Änderung des Einstellparameters einen positiven Einfluss haben wird, so dass keine weitere Verstellung vorzunehmen ist.

### Bezugszeichenliste:

- 1: Mähdrescher
- 2: Getreideschneidwerk
- 3: Schrägförderer
- 4: Einzugsketten
- 5: Vorbeschleunigertrommel
- 6: Dreschtrommel
- 7: Wendetrommel
- 8: Dreschkorb
- 9: Schüttler
- 10: Obersieb
- 11: Untersieb
- 12: Überkehrelevator
- 13: Kornelevator
- 14: Ertragsmesssystem
- 15: Kalibrierwaage
- 16: Überkehrmesseinrichtung
- 17: Obersiebverlustmesseinrichtung
- 18: Obersiebweitenmesseinrichtung
- 19: Schüttlerverlustsensor
- 20: Erntemengenmesseinrichtung
- 21: Dreschkorbweitenmesseinrichtung
- 22: Schnitthöhenmesseinrichtung
- 23: Fahrgeschwindigkeitsmesseinrichtung
- 24: Reinigungsgebläse
- 25: Reinigungsgebläsemesseinrichtung
- 26: Untersiebweitenmesseinrichtung
- 27: Vorbereitungsboden
- 28: Rücklaufboden
- 29: Anzeigeeinheit
- 30: Steuereinheit
- 31: Dreschtrommeldrehzahlmessesseinrichtung
- 32: Bearbeitungsfläche
- 33: Korntank
- 34: Fallstufe
- 35: Fahrerkabine
- 36: Piktogramm
- 37: negativer Gesichtsausdruck
- 38: Verlustkörner
- 39: positiver Gesichtsausdruck
- 40: Symbol
- 41: Bildschirmdarstellung
- 42: Bereich
- 43: Bereich
- 44: Piktogramm
- 45: Symbol
- 46: Ausrufezeichen
- 47: Symbol
- A: Prozessfeld
- B: Prozessfeld
- C: Prozessfeld
- D: Prozessfeld
- E: Prozessfeld
- F: Prozessfeld

## Patentansprüche

1. Landwirtschaftliches Arbeitsfahrzeug mit einer Mehrzahl von Arbeitsaggregaten, zumindest einer Steuereinheit (30) zur Beeinflussung der Einstellparameter der Arbeitsaggregate, einer Speichereinheit und zumindest einer Anzeigeeinheit (29), wobei in Abhängigkeit der Beeinflussung einzelner Einstellparameter der Arbeitsaggregate durch einen Bediener eine zu erwartende Änderung der Funktion und/oder des Arbeitsergebnisses einzelner Arbeitsaggregate oder einer Mehrzahl von Arbeitsaggregaten in der Anzeigeeinheit (29) dargestellt wird,
**dadurch gekennzeichnet,**
**dass** die zu erwartende Änderung der Funktion und/oder des Arbeitsergebnisses einzelner Arbeitsaggregate oder einer Mehrzahl von Arbeitsaggregaten In Form einer Tendenz der zu erwartenden Auswirkungen in der Anzeigeeinheit (29) dargestellt wird.

2. Landwirtschaftliches Arbeitsfahrzeug nach Anspruch 1, **dadurch gekennzeichnet, dass** die zu erwartende Änderung der Funktion und/oder des Arbeitsergebnisses einzeiner Arbeitsaggregate oder einer Mehrzahl von Arbeitsaggregaten bewertet In der Anzelgeeinhelt (29) dargestellt wird.

3. Landwirtschaftliches Arbeitsfahrzeug nach einem der vorstehenden Ansprüche, **dadurch gekennzeichnet, dass** in der Speichereinheit eine Vielzahl von Einstellparametern mit deren Einfluss auf die Funktion und/oder das Arbeitsergebnis einzelner Arbeitsaggregate oder einer Mehrzahl von Arbeitsaggregaten wiederaufrufbar hinterlegt sind, die jeweils mit den durch den Bediener beeinflussten aktuellen Einstellparametern verglichen werden, um eine zu erwartende Änderung der Funktion und/oder des Arbeitsergebnisses in der Anzeigeeinheit (29) darzustellen.

4. Landwirtschaftliches Arbeitsfahrzeug nach Anspruch 3, **dadurch gekennzeichnet, dass** von den in der Speichereinheit hinterlegten Einstellparametern mit deren Einfluss auf die Funktion und/oder das Arbeitsergebnis einzelner Arbeitsaggregate oder einer Mehrzahl von Arbeitsaggregaten abweichende Einstellparameter und/oder Funktionen und/oder Arbeitsergebnisse wiederaufrufbar in der Speichereinheit speicherbar sind.

5. Landwirtschaftliches Arbeitsfahrzeug nach einem der vorstehenden Ansprüche, **dadurch gekennzeichnet, dass** in der Steuereinheit (30) und/oder der Speichereinheit zumindest ein Algorithmus hinterlegt ist, der in Abhängigkeit der Beeinflussung einzelner Einstellparameter der Arbeitsaggregate durch einen Bediener eine zu erwartende Änderung der Funktion und/oder des Arbeitsergebnisses einzelner Arbeitsaggregate oder einer Mehrzahl von Arbeitsaggregaten berechnet, die In der Anzeigeeinheit (29) dargestellt wird.

6. Landwirtschaftliches Arbeitsfahrzeug nach einem der vorstehenden Ansprüche, **dadurch gekennzeichnet, dass** die zu erwartende Änderung der Funktion und/oder des Arbeitsergebnisses einzelner Arbeitsaggregate oder einer Mehrzahl von Arbeitsaggregaten in Form von unterschiedlichen Piktogrammen (36,44) in der Anzeigeeinheit (29) dargestellt werden.

7. Landwirtschaftliches Arbeitsfahrzeug nach Anspruch 6 7, **dadurch gekennzeichnet, dass** in Abhängigkeit der zu erwartenden Änderung der Funktion und/oder des Arbeitsergebnisses einzelner Arbeitsaggregate oder einer Mehrzahl von Arbeitsaggregaten die Form und/oder die Farbe und/oder die Größe der In der Anzeigeeinheit (29) dargestellten Piktogramme (36,44) unterschiedlich ist.

8. Landwirtschaftliches Arbeitsfahrzeug nach einem der vorstehenden Ansprüche, **dadurch gekennzeichnet, dass** eine zu erwartende Änderung der Funktion und/oder des Arbeitsergebnisses einzelner Arbeitsaggregate oder einer Mehrzahl von Arbeitsaggregaten nur für ein bestimmtes Zeitintervall in der Anzeigeeinheit (29) dargestellt wird.

9. Landwirtschaftliches Arbeitsfahrzeug nach einem der vorstehenden Ansprüche, **dadurch gekennzeichnet, dass** in der Speichereinheit eine Mehrzahl von Einsteilparametern mit deren Einfluss auf die Funktion und/oder das Arbeitsergebnis einzelner Arbeitsaggregate oder einer Mehrzahl von Arbeitsaggregaten wiederaufrufbar hinterlegt sind, die jeweils mit den durch den Bediener beeinflussten aktuellen Einstellparametern verglichen werden, um eine zu erwartende Änderung der Funktion und/oder des Arbeitsergebnisses in der Anzeigeeinheit (29) darzustellen, und wobei im Falle einer zu erwartenden negativen Änderung der Funktion und/oder des Arbeitsergebnisses dem Bediener zusätzlich in der Speichereinheit hinterlegte Einsteilparameter angezeigt werden, die eine positive Änderung der Funktion und/oder des Arbeitsergebnisses bewirken würden.

10. Landwirtschaftliches Arbeitsfahrzeug nach einem der vorstehenden Ansprüche, **dadurch gekennzeichnet, dass** der Bediener aus einer Mehrzahl von Funktionen und/oder Arbeitsergebnissen einzelner Arbeitsaggregate oder einer Mehrzahl von Arbeitsaggregaten einzelne oder eine Mehrzahl von Funktionen und/oder Arbeitsergebnissen auswählen kann, deren zu erwartende Änderung in der Anzeigeeinheit (29) dargestellt werden.

11. Landwirtschaftliches Arbeitsfahrzeug nach Anspruch 10, **dadurch gekennzeichnet, dass** der Bediener bei der Auswahl von einer Mehrzahl von anzuzeigenden zu erwartenden Änderungen die ausgewählten zu erwarten den Änderungen gewichtet bewerten kann.

12. Landwirtschaftliches Arbeitsfahrzeug nach einem der vorstehenden Ansprüche, **dadurch gekennzeichnet, dass** das landwirtschaftliche Arbeltsfahrzeug als Mähdrescher (1) ausgeführt ist, wobei der Bediener im Falle einer erfassten zu hohen Überkehrmenge die Einstellung der Dreschkorbweite verringert, die Steuereinheit (30) den Einstellparameter der Dreschkorbweite mit In der Speichereinheit hinterlegten Einstellparametern und deren Einfluss auf das Arbeitsergebnis vergleicht, und Im Falle zu gering eingestellten Dreschkorbweite in der Anzeigeeinheit (29) dargestellt wird, dass sich tendenziell die Menge des Bruchkorns im Erntegut erhöhen wird.

13. Landwirtschaftliches Arbeitsfahrzeug, nach Anspruch 12, **dadurch gekennzeichnet, dass** der Bediener im Falle einer erfassten zu hohen Menge an Bruchkorn im Erntegut die Einstellung der Dreschkorbweite vergrößert, die Steuereinheit (30) den Einstellparameter der Dreschkorbweite mit in der Speichereinheit hinterlegten Einstellparametern und deren Einfluss auf das Arbeitsergebnis vergleicht, und im Falle zu groß eingestellten Dreschkorbweite in der Anzeigeeinheit (29) dargestellt wird, dass sich tendenziell die Menge der Überkehr erhöhen wird.

14. Landwirtschaftliches Arbeitsfahrzeug, nach einem der Ansprüche 12 oder 13, **dadurch gekennzeichnet, dass** der Bediener im Falle einer erfassten zu hohen Verunreinigung des in den Korntank (33) geförderten Erntegutes die Einstellung der Sieböffnungsweite des Obersiebes (10) und/oder des Untersiebes (11) verringert, die Steuereinheit (30) den Einsteilparameter der Sieböffnungsweite mit In der Speichereinheit hinterlegten Einstellparametern und deren Einfluss auf das Arbeitsergebnis vergleicht, und im Falle zu gering eingestellten Sieböffnungsweite in der Anzeigeeinheit (29) dargestellt wird, dass sich tendenziell die Menge der Reinigungsverluste erhöhen wird.

15. Landwirtschaftliches Arbeitsfahrzeug nach einem der Ansprüche 12 bis 14, **dadurch gekennzeichnet, dass** der Bediener im Falle von erfassten zu hohen Reinigungsverlusten die Einstellung der Sleböffnungsweite des Oberslebes (10) undloder des Untersiebes (11) vergrößert, die Steuereinheit (30) den Einstellparameter der Sieböffnungsweite mit in der Speichereinheit hinterlegten Einstellparametern und deren Einfluss auf das Arbeitsergebnis vergleicht, und Im Falle zu groß eingestellten Sieböffnungsweite in der Anzeigeeinheit (29) dargestellt wird, dass sich tendenziell die Reinheit des in den Korntank (33) geförderten Erntegutes verschlechtern wird.

16. Landwirtschaftliches Arbeitsfahrzeug nach einem der Ansprüche 12 bis 15, **dadurch gekennzeichnet, dass** der Bediener im Falle einer erfassten zu hohen Verunreinigung des in den Korntank (33) geförderten Erntegutes die Einstellung der Drehzahl des Reinigungsgebläses (24) erhöht, die Steuereinheit (30) den Einstellparameter der Reinigungsgebläsedrehzahl mit in der Speichereinheit hinterlegten Einstellparametern und deren Einfluss auf das Arbeitsergebnis vergleicht, und im Falle zu hoch eingestellten Reinigungsgebläsedrehzahl in der Anzeigeeinheit (29) dargestellt wird, dass sich tendenziell die Menge der Reinigungsverluste erhöhen wird.

17. Landwirtschaftliches Arbeitsfahrzeug nach einem der Ansprüche 12 bis 16, **dadurch gekennzeichnet, dass** der Bediener im Falle von erfassten zu hohen Reinigungsverlusten die Einstellung der Drehzahl des Reinigungsgebläses (24) verringert, die Steuereinheit (30) den Einstellparameter der Reinigungsgebläsedrehzahl mit in der Speichereinheit hinterlegten Einstellparametern und deren Einfluss auf das Arbeitsergebnis vergleicht, und im Falle zu niedrig eingestellten Reinigungsgebläsedrehzahl in der Anzeigeeinheit (29) dargestellt wird, dass sich tendenziell die Reinheit des in den Korntank (33) geförderten Erntegutes verschlechtern wird.

## Claims

1. An agricultural working vehicle comprising a plurality of working assemblies, at least one control unit (30) for influencing the setting parameters of the working assemblies, a memory unit and at least one display unit (29), wherein a change to be expected in the function and/or the working result of individual working assemblies or a plurality of working assemblies is represented in the display unit (29) in dependence on the influencing of individual setting parameters of the working assemblies by an operator,
**characterised in that**
the change to be expected in the function and/or working result of individual working assemblies or a plurality of working assemblies is represented in the form of a trend in the effects to be expected in the display unit (29).

2. An agricultural working vehicle according to claim 1 **characterised in that** the change to be expected in the function and/or the working result of individual working assemblies or a plurality of working assemblies is represented in evaluated relationship in the display unit (29).

3. An agricultural working vehicle according to one of the preceding claims **characterised in that** retrievably stored in the memory unit are a plurality of setting parameters with the influence thereof on the function and/or working result of individual working assemblies or a plurality of working assemblies, which are respectively compared to the prevailing setting parameters influenced by the operator to represent a change to be expected in the function and/or the working result in the display unit (29).

4. An agricultural working vehicle according to claim 3 **characterised in that** setting parameters and/or functions and/or working results, that differ from the setting parameters stored in the memory unit with the influence thereof on the function and/or the working result of individual working assemblies or a plurality of working assemblies can be retrievably stored in the memory unit.

5. An agricultural working vehicle according to one of the preceding claims **characterised in that** stored in the control unit (30) and/or the memory unit is at least one algorithm which in dependence on the influencing of individual setting parameters of the working assemblies by an operator calculates a change to be expected in the function and/or the working result of individual working assemblies or a plurality of working assemblies, that is represented in the display unit (29).

6. An agricultural working vehicle according to one of the preceding claims **characterised in that** the change to be expected in the function and/or the working result of individual working assemblies or a plurality of working assemblies are represented in the display unit (29) in the form of different pictograms (36, 44).

7. An agricultural working vehicle according to claim 6 **characterised in that** the form and/or the colour and/or the size of the pictograms (36, 44) represented in the display unit (29) is different in dependence on the change to be expected in the function and/or the working result of individual working assemblies or a plurality of working assemblies.

8. An agricultural working vehicle according to one of the preceding claims **characterised in that** a change to be expected in the function and/or the working result of individual working assemblies or a plurality of working assemblies is represented in the display unit (29) only for a given period of time.

9. An agricultural working vehicle according to one of the preceding claims **characterised in that** retrievably stored in the memory unit are a plurality of setting parameters with the influence thereof on the function and/or the working result of individual working assemblies or a plurality of working assemblies, which are respectively compared to the prevailing setting parameters influenced by the operator in order to represent in the display unit (29) a change to be expected in the function and/or the working result, and wherein in the case of a negative change to be expected in the function and/or the working result setting parameters which are stored in the display unit and which would cause a positive change in the function and/or the working result are additionally displayed to the operator.

10. An agricultural working vehicle according to one of the preceding claims **characterised in that** the operator can select from a plurality of functions and/or working results of individual working assemblies or a plurality of working assemblies individual ones or a plurality of functions and/or working results whose change to be expected are displayed in the display unit (29).

11. An agricultural working vehicle according to claim 10 **characterised in that** in selecting a plurality of changes which are to be expected and which are to be displayed the operator can evaluate in weighted relationship the selected changes to be expected.

12. An agricultural working vehicle according to one of the preceding claims **characterised in that** the agricultural working vehicle is in the form of a combine harvester (1), wherein in the case of a detected excessive amount of tailings the operator reduces the setting of the threshing concave width, the control unit (30) compares the setting parameter of the threshing concave width to setting parameters stored in the memory unit and the influence thereof on the working result, and in the case of a threshing concave width which is set too small the display unit (29) shows that the amount of broken grain in the crop material will tend to increase.

13. An agricultural working vehicle according to claim 12 **characterised in that** in the case of a detected excessive amount of broken grain in the crop material the operator increases the setting of the threshing concave width, the control unit (30) compares the setting parameter of the threshing concave width to setting parameters stored in the memory unit and the influence thereof on the working result, and in the case of a threshing concave width which is set too large the display unit (29) shows that the amount of tailings will tend to increase.

14. An agricultural working vehicle according to one of claims 12 and 13 **characterised in that** in the event of a detected excessive contamination of the crop material conveyed into the grain tank (33) the operator reduces the setting of the sieve opening width of the upper sieve (10) and/or the lower sieve (11), the control unit (30) compares the setting parameter of the sieve opening width to setting parameters stored in the memory unit and the influence thereof on the working result and in the event of a sieve opening width which is set too small the display unit (29) shows that the amount of cleaning losses will tend to increase.

15. An agricultural working vehicle according to one of claims 12 to 14 **characterised in that** in the event of detected excessively high cleaning losses the operator increases the setting of the sieve opening width of the upper sieve (10) and/or the lower sieve (11), the control unit (30) compares the setting parameter of the sieve opening width to setting parameters stored in the memory unit and the influence thereof on the working result and in the event of a sieve opening width which is set too large the display unit (29) shows that the cleanliness of the crop material conveyed into the grain tank (33) will tend to worsen.

16. An agricultural working vehicle according to one of claims 12 and 15 **characterised in that** in the event of a detected excessive contamination of the crop material conveyed into the grain tank (33) the operator increases the setting of the rotary speed of the cleaning blower (24), the control unit (30) compares the setting parameter of the cleaning blower rotary speed to setting parameters stored in the memory unit and the influence thereof on the working result and in the event of the cleaning blower rotary speed being set too high the display unit (29) shows that the amount of cleaning losses will tend to increase.

17. An agricultural working vehicle according to one of claims 12 to 16 **characterised in that** in the event of detected excessively high cleaning losses the operator reduces the setting of the rotary speed of the cleaning blower (24), the control unit (30) compares the setting parameter of the cleaning blower rotary speed to setting parameters stored in the memory unit and the influence thereof on the working result and in the event of a cleaning blower rotary speed which is set too low the display unit (29) shows that the cleanliness of the crop material conveyed into the grain tank (33) will tend to worsen.

## Revendications

1. Véhicule de travail agricole comportant une pluralité d'organes de travail, au moins une unité de commande (30) pour influencer les paramètres de réglage des organes de travail, une unité de mémoire et au moins une unité d'affichage (29), une modification escomptée de la fonction et/ou du résultat de travail de certains organes de travail ou d'une pluralité d'organes de travail étant représentée sur l'unité d'affichage (29) en fonction de l'influence exercée par un opérateur sur certains paramètres de réglage des organes de travail, **caractérisé en ce que** la modification escomptée de la fonction et/ou du résultat de travail de certains organes de travail ou d'une pluralité d'organes de travail est représentée, sur l'unité d'affichage (29), sous la forme d'une tendance des conséquences escomptées.

2. Véhicule de travail agricole selon la revendication 1, **caractérisé en ce que** la modification escomptée de la fonction et/ou du résultat de travail de certains organes de travail ou d'une pluralité d'organes de travail est représentée, sur l'unité d'affichage (29), sous forme pondérée.

3. Véhicule de travail agricole selon une des revendications précédentes, **caractérisé en ce qu'**une pluralité de paramètres de réglage avec leur influence sur la fonction et/ou le résultat de travail de certains organes de travail ou d'une pluralité d'organes de travail sont stockés dans l'unité de mémoire de manière à pouvoir être rappelés, lesquels paramètres de réglage étant respectivement comparés aux paramètres de réglage actuels influencés par l'opérateur pour représenter une modification escomptée de la fonction et/ou du résultat de travail sur l'unité d'affichage (29).

4. Véhicule de travail agricole selon la revendication 3, **caractérisé en ce que** des paramètres de réglage et/ou des fonctions et/ou des résultats de travail différant des paramètres de réglage stockés dans l'unité de mémoire avec leur influence sur la fonction et/ou le résultat de travail de certains organes de travail ou d'une pluralité d'organes de travail peuvent être stockés dans l'unité de mémoire de manière à pouvoir être rappelés.

5. Véhicule de travail agricole selon une des revendications précédentes, **caractérisé en ce que**, dans l'unité de commande (30) et/ou dans l'unité de mémoire, est stocké au moins un algorithme qui calcule une modification escomptée de la fonction et/ou du résultat de travail de certains organes de travail ou d'une pluralité d'organes de travail en fonction de l'influence exercée par un opérateur sur certains paramètres de réglage des organes de travail, ladite modification escomptée étant représentée sur l'unité d'affichage (29).

6. Véhicule de travail agricole selon une des revendications précédentes, **caractérisé en ce que**, sur l'unité d'affichage (29), la modification escomptée de la fonction et/ou du résultat de travail de certains organes de travail ou d'une pluralité d'organes de travail est représentée sous la forme de divers pictogrammes (36, 44).

7. Véhicule de travail agricole selon la revendication 6, **caractérisé en ce que** la forme et/ou la couleur et/ou la taille des pictogrammes (36, 44) représentés sur l'unité d'affichage (29) sont différentes en fonction de la modification escomptée de la fonction et/ou du résultat de travail de certains organes de travail ou d'une pluralité d'organes de travail.

8. Véhicule de travail agricole selon une des revendications précédentes, **caractérisé en ce qu'**une modification escomptée de la fonction et/ou du résultat de travail de certains organes de travail ou d'une pluralité d'organes de travail n'est représentée, sur l'unité d'affichage (29), que pendant un certain laps de temps.

9. Véhicule de travail agricole selon une des revendications précédentes, **caractérisé en ce qu'**une pluralité de paramètres de réglage avec leur influence sur la fonction et/ou le résultat de travail de certains organes de travail ou d'une pluralité d'organes de travail sont stockés dans l'unité de mémoire de manière à pouvoir être rappelés, lesdits paramètres de réglage étant respectivement comparés avec les paramètres de réglage actuels influencés par l'opérateur pour représenter une modification escomptée de la fonction et/ou du résultat de travail sur l'unité d'affichage (29) et, si la modification escomptée de la fonction et/ou du résultat de travail est négative, des paramètres de réglage supplémentaires stockés dans l'unité de mémoire et aptes à provoquer une modification positive de la fonction et/ou du résultat de travail sont affichés à l'opérateur.

10. Véhicule de travail agricole selon une des revendications précédentes, **caractérisé en ce que** l'opérateur peut sélectionner, parmi une pluralité de fonctions et/ou de résultats de travail de certains organes de travail ou d'une pluralité d'organes de travail, certains ou une pluralité de fonctions et/ou de résultats de travail dont la modification escomptée est représentée sur l'unité d'affichage (29).

11. Véhicule de travail agricole selon la revendication 10, **caractérisé en ce que**, lors de la sélection d'une pluralité de modifications escomptées à afficher, l'opérateur peut évaluer de manière pondérée les modifications escomptées sélectionnées.

12. Véhicule de travail agricole selon une des revendications précédentes, **caractérisé en ce que** le véhicule de travail agricole est réalisé sous la forme d'une moissonneuse-batteuse (1), dans laquelle, en cas de quantité excessive d'otons détectée, l'opérateur diminue le réglage de la largeur du contre-batteur, l'unité de commande (30) compare le paramètre de réglage de la largeur du contre-batteur avec des paramètres de réglage et avec leur influence sur le résultat de travail stockés dans l'unité de mémoire, et, en cas de réglage insuffisant de la largeur du contre-batteur, l'unité d'affichage (29) indique que la quantité de grains brisés dans le produit de récolte va avoir tendance à augmenter.

13. Véhicule de travail agricole selon la revendication 12, **caractérisé en ce que**, en cas de quantité excessive de grains brisés détectée dans le produit de récolte, l'opérateur augmente le réglage de la largeur du contre-batteur, l'unité de commande (30) compare le paramètre de réglage de la largeur du contre-batteur avec des paramètres de réglage et avec leur influence sur le résultat de travail stockés dans l'unité de mémoire, et, en cas de réglage excessif de la largeur du contre-batteur, l'unité d'affichage (29) indique que la quantité d'otons va avoir tendance à augmenter.

14. Véhicule de travail agricole selon une des revendications 12 ou 13, **caractérisé en ce que**, en cas de contamination excessive détectée du produit de récolte transporté dans la trémie à grains (33), l'opérateur diminue le réglage de la largeur d'ouverture de grille de la grille supérieure (10) et/ou de la grille inférieure (11), l'unité de commande (30) compare le paramètre de réglage de la largeur d'ouverture de grille avec des paramètres de réglage et avec leur influence sur le résultat de travail stockés dans l'unité de mémoire, et, en cas de réglage insuffisant de la largeur d'ouverture de grille, l'unité d'affichage (29) indique que la quantité des pertes de nettoyage va avoir tendance à augmenter.

15. Véhicule de travail agricole selon une des revendications 12 à 14, **caractérisé en ce que**, en cas de pertes de nettoyage excessives détectées, l'opérateur augmente le réglage de la largeur d'ouverture de grille de la grille supérieure (10) et/ou de la grille inférieure (11), l'unité de commande (30) compare le paramètre de réglage de la largeur d'ouverture de grille avec des paramètres de réglage et avec leur influence sur le résultat de travail stockés dans l'unité de mémoire, et, en cas de réglage excessif de la largeur d'ouverture de grille, l'unité d'affichage (29) indique que la propreté du produit de récolte transporté dans la trémie à grains (33) va avoir tendance à se dégrader.

16. Véhicule de travail agricole selon une des revendications 12 à 15, **caractérisé en ce que**, en cas de contamination excessive détectée du produit de récolte transporté dans la trémie à grains (33), l'opérateur augmente le réglage de la vitesse de rotation du ventilateur de nettoyage (24), l'unité de commande (30) compare le paramètre de réglage de la vitesse de rotation du ventilateur de nettoyage avec des paramètres de réglage et avec leur influence sur le résultat de travail stockés dans l'unité de mémoire, et, en cas de réglage excessif de la vitesse de rotation du ventilateur de nettoyage, l'unité d'affichage (29) indique que la quantité des pertes de nettoyage va avoir tendance à augmenter.

17. Véhicule de travail agricole selon une des revendications 12 à 16, **caractérisé en ce que**, en cas de pertes de nettoyage excessives détectées, l'opérateur diminue le réglage de la vitesse de rotation du ventilateur de nettoyage (24), l'unité de commande (30) compare le paramètre de réglage de la vitesse de rotation du ventilateur de nettoyage avec des paramètres de réglage et avec leur influence sur le résultat de travail stockés dans l'unité de mémoire, et, en cas de réglage excessif de la vitesse de rotation du ventilateur de nettoyage, l'unité d'affichage (29) indique que la propreté du produit de récolte transporté dans la trémie à grains (33) va avoir tendance à se dégrader.
